# FASCICULE DE BREVET EUROPEEN

(11) **EP 3 648 931 B1**
(45) Date de publication et mention de la délivrance du brevet: **05.05.2021**
(21) Numéro de dépôt: 18748973.7
(22) Date de dépôt: 14.06.2018
(51) Int. Cl.: B25B 33/00, F02F 1/38, G01N 21/88, G01N 21/95, G01M 15/00, G01B 11/30, B22D 19/00

(54) **PROCÉDÉ DE CONTRÔLE VISUEL DE PORTIONS LAISSÉES BRUTES D'UNE ÉBAUCHE DE CULASSE DE MOTEUR THERMIQUE**
VERFAHREN ZUR VISUELLEN ÜBERPRÜFUNG VON RAU GELASSENEN TEILEN EINES ZYLINDERKOPFZUSCHNITTES EINES VERBRENNUNGSMOTORS
METHOD FOR VISUALLY CHECKING PORTIONS LEFT ROUGH OF A COMBUSTION ENGINE CYLINDER HEAD BLANK

(30) Priorité: 03.07.2017 FR 1756251
(43) Date de publication de la demande: 13.05.2020
(73) Titulaire: PSA Automobiles SA, 78300 Poissy (FR)
(72) Inventeur: VERMEERSCH, Vincent, 08700 Neufmanil (FR); DUFLOUX, Mario, 08230 Sevigny La Foret (FR); BOSQUET, Eric, 08150 Laval Morency (FR); JACQUES, Freddy, 08430 Launois Sur Vence (FR)
(86) Numéro de dépôt international: PCT/FR2018/051405
(87) Numéro de publication internationale: WO 2019/008244

(56) Documents cités:
- EP-A1- 0 854 406
- DE-A1- 3 511 980
- DE-A1- 10 331 536
- DE-A1- 19 933 509
- DE-A1-102007 027 220
- US-A- 4 774 751
- US-A- 5 333 668
- US-A- 5 848 579
- US-A1- 2012 118 055

## Description

La présente invention concerne un procédé de contrôle visuel de portions laissées brutes d'une ébauche de culasse de moteur thermique, ce contrôle se faisant par un gabarit de contrôle.

La présente invention se situe dans le domaine du contrôle de pièces de fonderie brutes et a pour but de visualiser plus distinctement les parties de chambres de combustion restant brutes sur le produit fini qu'est la culasse.

Le cahier des charges d'une culasse de moteur thermique stipule que la ou les chambres de combustions délimitées dans la culasse doivent être exemptes de tous défauts dans les parties restant brutes sur la culasse finie.

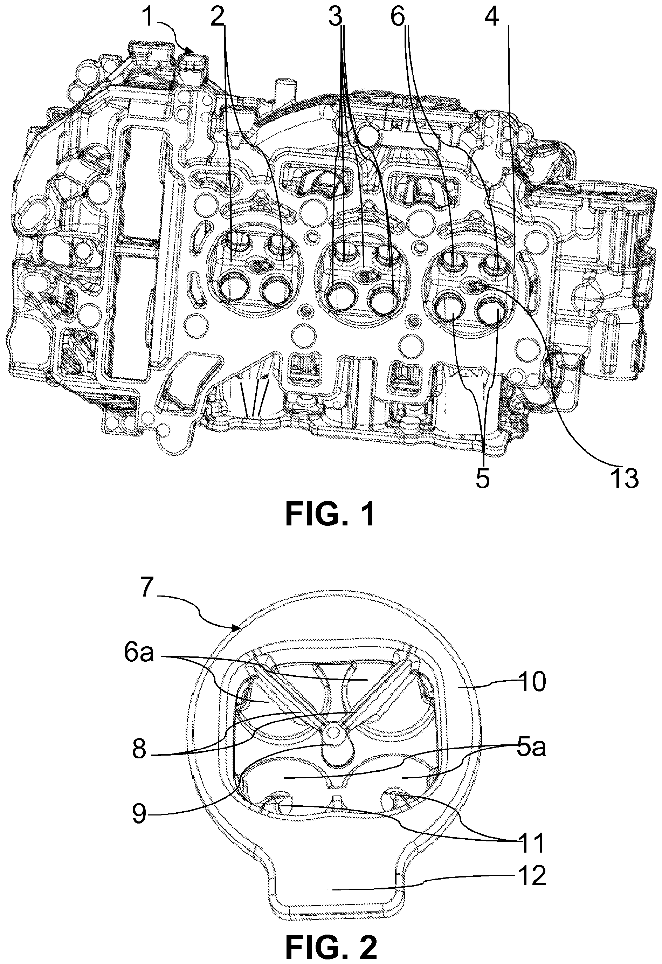

Comme il est visible à la figure 1 pour une culasse comprenant trois chambres de combustion, il est fait une différence entre les portions de culasse qui vont être usinées, par exemple les portions référencées 3 pour une des chambres de combustion et les portions de culasse laissées brutes et référencées 2 pour une des chambres de combustion. Bien que les références 2 et 3 soient respectivement associées à une chambre de combustion, ces portions respectivement à usiner et laissées brutes sont présentes pour toutes les chambres de combustion.

Aucun outil ou moyen de contrôle antérieur n'était utilisé pour contrôler l'aspect des chambres de combustion sur culasses brutes. Ceci présentait le désavantage que sans un tel outil, la délimitation des zones brutes restantes sur le produit fini des zones qui seront usinées était imprécise.

Le document KR-A-100527942 concerne un dispositif pour mesurer le volume d'une chambre de combustion d'une culasse de véhicule. Le dispositif est constitué d'une unité de gabarit installée sur la surface de la culasse située dans un espace vide d'une base disposée sur une cellule de pesée. Ce gabarit n'est cependant pas destiné à isoler les portions laissées brutes sur la culasse finale des portions à usiner avant l'obtention de la culasse finale mais concerne la vérification du volume de chambres de combustion Le document DE 199 33 509 A1 concerne un dispositif et un procédé pour mesurer des caractéristiques d'une culasse.

Le problème de la présente invention est de pouvoir différencier précisément les zones laissées brutes sur une culasse de moteur thermique des zones qui vont être usinées afin de pouvoir faire un contrôle visuel et précis de ces zones en les délimitant précisément.

Pour atteindre cet objectif, il est prévu selon l'invention un procédé de contrôle visuel de portions laissées brutes lors d'une finition d'une ébauche d'une culasse de moteur thermique délimitant au moins une chambre de combustion, les portions laissées brutes devant être exemptes de défaut de surface, la culasse présentant aussi des portions à usiner, caractérisé en ce que le contrôle visuel se fait avec un masquage des portions à usiner en ne laissant apparentes pour un opérateur que les portions laissées brutes pour un contrôle visuel de surface de ces portions laissées brutes, le masquage se faisant par introduction d'un gabarit de contrôle sur et dans la culasse.

L'effet technique est de différencier les contours des portions laissées brutes des contours des portions à usiner. La fiabilité du contrôle visuel est renforcée. Sans le masquage, l'opérateur qui contrôle les ébauches brutes ne sait pas où s'arrête une portion laissée brute d'une portion adjacente destinée à être usinée sur la culasse. Sans ce masquage, avantageusement par un gabarit de contrôle, il y a un risque de laisser passer des culasses non conformes ou de rebuter des culasses conformes.

Il est obtenu un gain en fiabilité du contrôle à effectuer, un gain en coût de fabrication et en diminution des rebuts en évitant d'usiner des pièces qui peuvent se révéler être non conformes après usinage et inversement de déclarer des pièces conformes en non conformes. Enfin, il est obtenu un gain en ergonomie visuelle lors du contrôle d'aspect avec une réduction du temps de prise de décision sur la conformité du produit.

L'invention concerne aussi un ensemble d'une ébauche d'une culasse de moteur thermique délimitant au moins une chambre de combustion et d'un gabarit de contrôle pour la mise en œuvre d'un tel procédé, dans lequel, l'ébauche présente des portions à usiner et des portions laissées brutes dans une culasse finie à partir de l'ébauche, les portions laissées brutes devant être notamment exemptes de défaut de surface, caractérisé en ce que le gabarit de contrôle est au moins partiellement introduit sur et dans ladite au moins une ébauche en présentant des dimensions prédéterminées pour masquer les portions à usiner et ne laisser apparentes que les portions laissées brutes pour un contrôle visuel de surface de ces portions laissées brutes.

Le gabarit selon la présente invention épouse à l'intérieur de la culasse la forme d'une ou de la chambre de combustion et ne laisse apparaître que les zones de la pièce qui resteront brutes après usinage des chambres de combustion. Il n'y a plus de confusion entre les parties des portions à usiner adjacentes et des parties de portions laissées brutes, ce qui conduit à une délimitation parfaite des portions laissées brutes pour un contrôle visuel.

Le gabarit de contrôle a pour but de se positionner sur l'ébauche de culasse dans une chambre de combustion en cachant les portions destinées à être usinées pour laisser apparaître à l'opérateur uniquement les portions brutes à contrôler. Le gabarit de contrôle est un moyen simple et de coût limité avec une efficacité optimale pour le contrôle visuel de portions laissées brutes sur une ébauche de culasse.

Avantageusement, l'ébauche de culasse comprend, associés à ladite au moins une chambre de combustion, au moins un passage d'admission et au moins un passage d'échappement dont leur pourtour est à usiner et le gabarit de contrôle recouvre lesdits au moins un passage d'admission et un passage d'échappement et leur pourtour par des portions de cache respectives.

Avantageusement, la culasse comprend au moins un évidement circulaire destiné à être en vis-à-vis de ladite au moins une chambre de combustion, l'évidement circulaire logeant en son intérieur lesdits au moins un passage d'admission et un passage d'échappement.

Avantageusement, le gabarit de contrôle comprend un corps formant un pourtour arrondi creux recouvrant une zone de bord périphérique de l'évidement circulaire, le corps comprenant en son intérieur un cache respectif pour lesdits au moins un passage d'admission et un passage d'échappement, chaque cache pénétrant dans l'évidement circulaire tandis que la portion de périphérie externe du corps est en appui contre la zone de bord périphérique de l'évidement circulaire.

Avantageusement, la portion de périphérie externe du corps est formée d'un méplat.

Avantageusement, le gabarit de contrôle comprend un pion se trouvant dans une zone médiane du corps et servant de cache pour un puits de bougie, le pion étant relié par une branche à un cache pour ledit au moins un passage d'échappement.

Avantageusement, ladite au moins une chambre de combustion est associée à deux passages d'admission et deux passages d'échappement, les deux passages d'admission étant de dimension plus grande que les deux passages d'échappement.

Avantageusement, le cache pour ledit au moins un passage d'admission est relié au corps par un élément de solidarisation partant d'un bord interne du pourtour arrondi du corps.

Avantageusement, le corps présente une languette de préhension faisant saillie du pourtour arrondi du corps et reposant sur la culasse sur une portion autre que la zone de bord périphérique de l'évidement circulaire.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une vue de dessus en perspective d'une ébauche de culasse pouvant être contrôlée par un procédé de contrôle visuel selon la présente invention,
- la figure 2 est une représentation schématique d'une vue de dessus en perspective d'un gabarit de contrôle faisant partie avec une ébauche de culasse d'un ensemble selon la présente invention,
- la figure 3 est une représentation schématique d'une vue de dessous en perspective d'un gabarit de contrôle faisant partie avec une ébauche de culasse d'un ensemble selon la présente invention,
- la figure 4 est une représentation schématique d'une vue de dessous d'un gabarit de contrôle faisant partie avec une ébauche de culasse d'un ensemble selon la présente invention,
- la figure 5 est une représentation schématique d'une vue de dessus en perspective d'une ébauche de culasse, avec une des chambres de combustion de l'ébauche recevant un gabarit de contrôle, l'ébauche et le gabarit de contrôle réalisant un ensemble selon la présente invention.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

Le moteur thermique portant une culasse contrôlée par un procédé selon la présente invention peut être un moteur de véhicule automobile mais aussi d'un autre moyen de transport. Le moteur thermique peut aussi être fixe en utilisation.

Aux figures il est illustré une culasse présentant trois chambres de combustion, ce qui n'est pas limitatif. De même le nombre de passages d'admission et d'échappement montrés aux figures, c'est-à-dire deux pour les passages d'admission et deux pour les passages d'échappement, n'est pas limitatif.

En se référant à toutes les figures, la présente invention concerne un procédé de contrôle visuel de portions laissées brutes 2 lors d'une finition d'une ébauche d'une culasse 1 de moteur thermique délimitant au moins une chambre de combustion.

Les portions laissées brutes 2 doivent être exemptes de défaut de surface, la culasse 1 présentant aussi des portions à usiner 3 dont les portions laissées brutes 2 doivent être différenciées.

Les portions laissées brutes 2 et les portions devant être usinées 3 ont été référencées aux figures, notamment à la figure 1, pour une seule chambre de combustion mais ce qui est énoncé pour ces portions référencées sont valables pour les portions équivalentes non référencées à ces figures.

Selon l'invention, le contrôle visuel se fait avec un masquage des portions à usiner 3 en ne laissant apparentes pour un opérateur que les portions laissées brutes 2 pour un contrôle visuel de surface de ces portions laissées brutes 2, le masquage se faisant par introduction d'un gabarit de contrôle 7 sur et dans la culasse 1.

Les portions laissées brutes 2 sont ainsi délimitées précisément et il ne peut y avoir de confusion entre des parties de portions laissées brutes 2 et des parties de portions à usiner 3. Le masquage se fait avantageusement par un gabarit de contrôle 7 comme il va être ultérieurement décrit par un mode de mise en œuvre du procédé de contrôle visuel selon la présente invention.

Un procédé de contrôle visuel peut s'opérer comme suit. Il est effectué une pose du gabarit de contrôle 7 sur et dans l'ébauche de la culasse 1, notamment dans la chambre de combustion de l'ébauche de la culasse 1 brute.

Ensuite, il est effectué un contrôle d'aspect des zones laissées visibles au travers du gabarit 7 dans la chambre de combustion, zones qui correspondent aux portions laissées brutes 2, étant donné que le gabarit de contrôle 7 a été prédéterminé pour ne laisser apparaître que ces portions laissées brutes 2.

L'invention concerne aussi un ensemble d'une ébauche d'une culasse 1 de moteur thermique délimitant au moins une chambre de combustion et d'un gabarit de contrôle 7 pour la mise en œuvre d'un procédé tel que précédemment décrit.

Dans ce procédé, l'ébauche présente des portions à usiner 3 et des portions laissées brutes 2 dans une culasse 1 finie à partir de l'ébauche, les portions laissées brutes 2 devant être exemptes de défaut de surface.

Selon l'invention, le gabarit de contrôle 7 est au moins partiellement introduit sur et dans ladite au moins une ébauche de culasse 1 en présentant des dimensions prédéterminées pour masquer les portions à usiner 3 et ne laisser apparentes que les portions laissées brutes 2 pour un contrôle visuel de surface de ces portions laissées brutes 2.

Le gabarit de contrôle 7 a pour but de se positionner sur l'ébauche de la culasse 1 dans une chambre de combustion en cachant les portions destinées à être usinées 3 pour laisser apparaître à l'opérateur uniquement les portions brutes 2 à contrôler. Ceci peut être fait simultanément par plusieurs gabarits de contrôle ou successivement par le même gabarit. Il peut être possible d'avoir une unité de gabarits regroupés pénétrant simultanément chacun dans une chambre de combustion de la culasse 1 du moteur thermique, cette unité étant élaborée pour une ébauche de culasse 1 spécifique.

La culasse 1 de moteur thermique peut comprendre, associés à ladite au moins une chambre de combustion, au nombre de trois aux figures ce qui n'est pas limitatif, au moins un passage d'admission 5 et au moins un passage d'échappement 6 dont leur pourtour est à usiner, aux figures deux passages d'admission 5 et deux passages d'échappement 6 par chambre de combustion, ce qui n'est pas limitatif. Ces passages d'admission et d'échappement forment les sièges de soupape respectivement d'admission et d'échappement et sont à usiner.

Le gabarit de contrôle 7 recouvre le ou les passages d'admission 5 et le ou les passages d'échappement 6 et leur pourtour par des portions de cache 5a, 6a respectives. Il est aussi possible de masquer un puits de bougie, dont un seul est référencé 13 à la figure 1, par le gabarit de contrôle 7, ceci par un pion 9 qui va être ultérieurement décrit. Le puits de bougie 13 est destiné à être usiné et donc fait partie des portions à usiner 3. D'autres portions à usiner 3 que celles mentionnées peuvent aussi être présentes et masquées.

La culasse 1 peut comprendre au moins un évidement 4 circulaire destiné à être en vis-à-vis de ladite au moins une chambre de combustion, l'évidement 4 circulaire logeant en son intérieur lesdits au moins un passage d'admission 5 et un passage d'échappement 6. Des bords de l'évidement 4 peuvent aider à supporter le gabarit de contrôle 7. Ainsi, le gabarit de contrôle 7 peut être positionné sur, autour de l'évidement 4, et dans la culasse 1, notamment ses caches 5a, 6a.

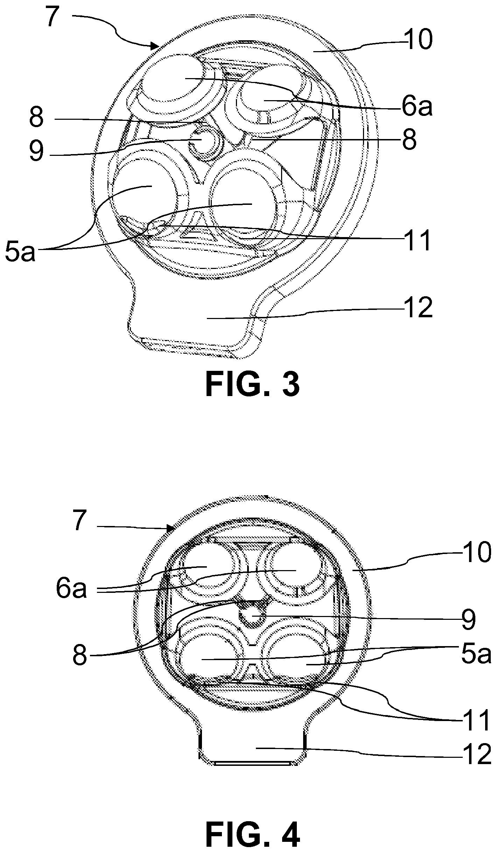

Comme il est particulièrement bien visible aux figures 2 à 4, le gabarit de contrôle 7 peut comprendre un corps 10 formant un pourtour arrondi creux recouvrant une zone de bord périphérique de l'évidement 4 circulaire. Le contour interne du gabarit de contrôle 7 correspond sensiblement au contour interne de l'évidement 4 associé à une chambre de combustion.

Le gabarit de contrôle 7 peut comprendre en son intérieur un cache 5a, 6a respectif pour lesdits au moins un passage d'admission 5 et un passage d'échappement 6, soient aux figures deux caches 5a pour les passages d'admission 5 et deux caches 6a pour les passages d'échappement 6. Les caches 5a, 6a peuvent être sensiblement circulaires pour des passages 5, 6 eux-mêmes circulaires.

Chaque cache 5a, 6a peut pénétrer dans l'évidement 4 circulaire tandis que la portion de périphérie externe du corps 10 peut être en appui contre la zone de bord périphérique de l'évidement 4 circulaire. Pour un meilleur contact avec le contour de l'évidement 4, la portion de périphérie externe du corps 10 peut être formée d'un méplat.

Le gabarit de contrôle 7 peut comprendre un pion 9 se trouvant dans une zone médiane du corps 10 et servant de cache pour un puits de bougie 13 précédemment mentionné. Le pion 9 peut être relié par une branche 8 à un cache 6a pour ledit au moins un passage d'échappement 6, soient deux branches 8 pour les deux passages d'échappement 6 montrés aux figures 2 à 5.

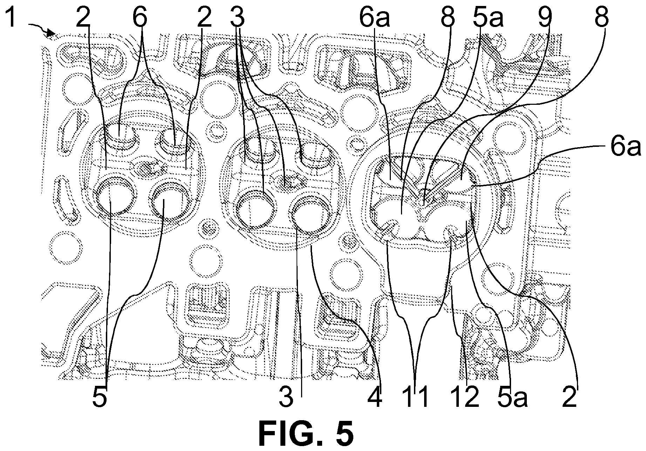

Comme montré aux figures 1 et 5, la ou chaque chambre de combustion peut être associée à deux passages d'admission 5 et deux passages d'échappement 6. Les deux passages d'admission 5 peuvent être de dimension plus grande que les deux passages d'échappement 6.

Le cache 5a pour ledit au moins un passage d'admission 5 peut être relié au corps 10 par un élément de solidarisation 11 partant d'un bord interne du pourtour arrondi du corps 10. Cet élément de solidarisation 11 pointe radialement vers le centre du cache 5a.

Pour faciliter sa manutention, le corps 10 peut présenter une languette 12 de préhension faisant saillie du pourtour arrondi du corps 10 et reposant sur la culasse 1 sur une portion autre que la zone de bord périphérique de l'évidement 4 circulaire. Le gabarit de contrôle 7 peut être en métal ou en matière plastique.

Il est possible d'appliquer la présente invention à d'autres pièces qu'une culasse 1 et présentant des analogies avec une culasse 1 de moteur thermique. Le gabarit de contrôle 7 peut être utilisé dans d'autres parties de la culasse 1 ou pour d'autres pièces afin de définir les portions restant brutes sur des pièces finies par rapport aux portions usinées.

L'invention n'est nullement limitée aux modes de réalisation décrits et illustrés qui n'ont été donnés qu'à titre d'exemples.

## Revendications

1. Procédé de contrôle visuel de portions laissées brutes (2) lors d'une finition d'une ébauche d'une culasse (1) de moteur thermique délimitant au moins une chambre de combustion, la culasse (1) présentant aussi des portions à usiner (3), **caractérisé en ce que** le contrôle visuel se fait avec un masquage des portions à usiner (3) en ne laissant apparentes pour un opérateur que les portions laissées brutes (2) pour un contrôle visuel de surface de ces portions laissées brutes (2), le masquage se faisant par introduction d'un gabarit de contrôle (7) sur et dans la culasse (1).

2. Ensemble d'une ébauche d'une culasse (1) de moteur thermique délimitant au moins une chambre de combustion et d'un gabarit de contrôle (7) pour la mise en œuvre du procédé selon la revendication 1, dans lequel, l'ébauche (1) présente des portions à usiner (3) et des portions laissées brutes (2) dans une culasse (1) finie à partir de l'ébauche, les portions laissées brutes (2) devant être exemptes de défaut de surface, **caractérisé en ce que** le gabarit de contrôle (7) est au moins partiellement introduit sur et dans ladite au moins une ébauche (1) en présentant des dimensions prédéterminées pour masquer les portions à usiner (3) et ne laisser apparentes que les portions laissées brutes (2) pour un contrôle visuel de surface de ces portions laissées brutes (2).

3. Ensemble selon la revendication 2, dans lequel, l'ébauche de culasse (1) comprend, associés à ladite au moins une chambre de combustion, au moins un passage d'admission (5) et au moins un passage d'échappement (6) dont leur pourtour est à usiner et le gabarit de contrôle (7) recouvre lesdits au moins un passage d'admission (5) et un passage d'échappement (6) et leur pourtour par des portions de cache (5a, 6a) respectives.

4. Ensemble selon la revendication 3, dans lequel la culasse (1) comprend au moins un évidement (4) circulaire destiné à être en vis-à-vis de ladite au moins une chambre de combustion, l'évidement (4) circulaire logeant en son intérieur lesdits au moins un passage d'admission (5) et un passage d'échappement (6).

5. Ensemble selon la revendication 4, dans lequel le gabarit de contrôle (7) comprend un corps (10) formant un pourtour arrondi creux recouvrant une zone de bord périphérique de l'évidement (4) circulaire, le corps (10) comprenant en son intérieur un cache (5a, 6a) respectif pour lesdits au moins un passage d'admission (5) et un passage d'échappement (6), chaque cache (5a, 6a) pénétrant dans l'évidement (4) circulaire tandis que la portion de périphérie externe du corps (10) est en appui contre la zone de bord périphérique de l'évidement (4) circulaire.

6. Ensemble selon la revendication 5, dans lequel la portion de périphérie externe du corps (10) est formée d'un méplat.

7. Ensemble selon la revendication 5 ou 6, dans lequel le gabarit de contrôle (7) comprend un pion (9) se trouvant dans une zone médiane du corps (10) et servant de cache pour un puits de bougie (13), le pion (9) étant relié par une branche (8) à un cache (6a) pour ledit au moins un passage d'échappement (6).

8. Ensemble selon la revendication 7, dans lequel ladite au moins une chambre de combustion est associée à deux passages d'admission (5) et deux passages d'échappement (6), les deux passages d'admission (5) étant de dimension plus grande que les deux passages d'échappement (6).

9. Ensemble selon l'une quelconque des revendications 5 à 8, dans lequel le cache (5a) pour ledit au moins un passage d'admission (5) est relié au corps (10) par un élément de solidarisation (11) partant d'un bord interne du pourtour arrondi du corps (10).

10. Ensemble selon l'une quelconque des revendications 5 à 9, dans lequel le corps (10) présente une languette (12) de préhension faisant saillie du pourtour arrondi du corps (10) et reposant sur la culasse (1) sur une portion autre que la zone de bord périphérique de l'évidement (4) circulaire.

## Patentansprüche

1. Verfahren zum visuellen Prüfen von rohen Teilen (2) beim Fertigstellen eines Rohlings eines Zylinderkopfs (1) einer Wärmekraftmaschine, der mindestens eine Brennkammer begrenzt, wobei der Zylinderkopf (1) auch zu bearbeitende Teile aufweist (3), charakterisiert, dass die Sichtprüfung mit einer Maskierung der zu bearbeitenden Teile (3) durchgeführt wird, wobei für einen Bediener nur die unbehandelten Teile sichtbar bleiben (2), um die Oberfläche dieser Teile unbehandelt zu lassen (2), die Die Maskierung erfolgt durch Einsetzen einer Steuervorrichtung (7) am und in den Zylinderkopf (1).

2. Zusammenbau eines Rohlings eines Zylinderkopfes (1) einer Wärmekraftmaschine, der mindestens eine Brennkammer begrenzt, und einer Steuervorrichtung (7) zur Durchführung des Verfahrens nach Anspruch 1, bei dem der Rohling (1) zu bearbeitende Teile aufweist (3) und Teile, die leer gelassen werden (2), in einem Zylinderkopf (1), der aus dem Rohling fertiggestellt ist, wobei die Teile leer bleiben (2), um frei von Oberflächenfehlern zu sein, **gekennzeichnet dadurch, dass** die Inspektionsvorrichtung (7) zumindest teilweise eingesetzt ist auf und in den mindestens einen Rohling (1) mit vorbestimmten Abmessungen, um die zu bearbeitenden Teile (3) zu verbergen und nur die unbehandelten Teile (2) sichtbar zu lassen, um die Oberfläche dieser unbehandelten Teile (2) visuell zu untersuchen.

3. Anordnung nach Anspruch 2, in dem die Zylinderkopfrohling (1) umfasst, die mit der mindestens einen Verbrennungskammer, mindestens einen Einlaßkanal (5) und mindestens einen Abgaskanal (6), Dessen Umfang sein bearbeitet und die Inspektionsvorrichtung (7) bedeckt den mindestens einen Einlasskanal (5) und einen Auslasskanal (6) und deren Umfang durch entsprechende Abdeckungsabschnitte (5a, 6a).

4. Anordnung nach Anspruch 3, bei der der Zylinderkopf (1) mindestens eine kreisförmige Aussparung (4) aufweist, die gegenüber der mindestens einen Brennkammer liegen soll, wobei die kreisförmige Aussparung (4) in ihrem Inneren den mindestens einen Ansaugkanal aufnimmt (5) und einen Auslasskanal (6).

5. Anordnung nach Anspruch 4, bei der die Inspektionsvorrichtung (7) einen Körper (10) umfasst, der einen hohlen, abgerundeten Umfang bildet, der eine Umfangskantenzone der kreisförmigen Aussparung (4) bedeckt, wobei der Körper (10) in seinem Inneren eine entsprechende Abdeckung aufweist (5a, 6a) für den mindestens einen Einlasskanal (5) und einen Auslasskanal (6), wobei jede Abdeckung (5a, 6a) in die kreisförmige Aussparung (4) eindringt, während der Teilaußenumfang des Körpers (10) trägt gegen die Umfangskantenzone der kreisförmigen Aussparung (4).

6. Anordnung nach Anspruch 5, wobei der äußere Umfangsabschnitt des Körpers (10) aus einer Ebene gebildet ist.

7. Anordnung nach Anspruch 5 oder 6, bei der die Prüfvorrichtung (7) einen Stift (9) umfasst, der sich in einem mittleren Bereich des Körpers (10) befindet und als Abdeckung für eine Zündkerzenvertiefung (13) dient, den Stift (9) durch einen Abzweig (8) mit einer Abdeckung (6a) für den mindestens einen Abgaskanal (6) verbunden sein.

8. Anordnung nach Anspruch 7, wobei die mindestens eine Brennkammer zwei Einlasskanälen (5) und zwei Auslasskanälen (6) zugeordnet ist, wobei die zwei Ansaugkanäle (5) eine größere Abmessung als die zwei Auslasskanäle (6) aufweisen.

9. Anordnung nach einem der Ansprüche 5 bis 8, bei der die Abdeckung (5a) für den mindestens einen Einlasskanal (5) durch ein Sicherungselement (11) ausgehend von einer Innenkante der mit dem Körper (10) verbunden ist abgerundeter Umfang des Körpers (10).

10. Anordnung nach einem der Ansprüche 5 bis 9, bei der der Körper (10) eine Greifzunge (12) aufweist, die aus dem abgerundeten Umfang des Körpers (10) herausragt und auf dem Zylinderkopf (1) auf einem anderen Abschnitt als ruht die periphere Randzone der kreisförmigen Aussparung (4).

## Claims

1. A method of visually inspecting portions left raw (2) during a finishing of a blank of a cylinder head (1) of a heat engine delimiting at least one combustion chamber, the cylinder head (1) also having portions to be machined (3), **characterized in that** the visual inspection is carried out with a masking of the portions to be machined (3) leaving visible to an operator only the portions left untreated (2) for a visual inspection of the surface of these portions left untreated (2), the masking being done by inserting a control jig (7) on and in the cylinder head (1).

2. Assembly of a blank of a cylinder head (1) of a heat engine delimiting at least one combustion chamber and of a control jig (7) for implementing the method according to claim 1, in which the blank (1) has portions to be machined (3) and portions left blank (2) in a cylinder head (1) finished from the blank, the portions left blank (2) to be free from surface defects, **characterized in that** the inspection jig (7) is at least partially introduced on and into said at least one blank (1) having predetermined dimensions to hide the portions to be machined (3) and only leave visible the portions left untreated (2)) for a visual inspection of the surface of these portions left untreated (2).

3. Assembly according to Claim 2, in which the cylinder head blank (1) comprises, associated with said at least one combustion chamber, at least one intake passage (5) and at least one exhaust passage (6) whose periphery is to be machined and the inspection jig (7) covers said at least one intake passage (5) and one exhaust passage (6) and their periphery by respective cover portions (5a, 6a).

4. Assembly according to Claim 3, in which the cylinder head (1) comprises at least one circular recess (4) intended to be opposite said at least one combustion chamber, the circular recess (4) accommodating in its inside said at least one intake passage (5) and one exhaust passage (6).

5. Assembly according to Claim 4, in which the inspection jig (7) comprises a body (10) forming a hollow rounded periphery covering a peripheral edge zone of the circular recess (4), the body (10) comprising in its interior a respective cover (5a, 6a) for said at least one intake passage (5) and one exhaust passage (6), each cover (5a, 6a) penetrating into the circular recess (4) while the portion outer periphery of the body (10) bears against the peripheral edge zone of the circular recess (4).

6. Assembly according to claim 5, wherein the outer periphery portion of the body (10) is formed of a flat.

7. Assembly according to claim 5 or 6, wherein the control jig (7) comprises a pin (9) located in a middle region of the body (10) and serving as a cover for a spark plug well (13), the pin (9) being connected by a branch (8) to a cover (6a) for said at least one exhaust passage (6).

8. Assembly according to claim 7, wherein said at least one combustion chamber is associated with two intake passages (5) and two exhaust passages (6), the two intake passages (5) being of larger dimension than the two exhaust passages (6).

9. Assembly according to any one of claims 5 to 8, in which the cover (5a) for said at least one inlet passage (5) is connected to the body (10) by a securing element (11) starting from a inner edge of the rounded perimeter of the body (10).

10. Assembly according to any one of claims 5 to 9, in which the body (10) has a gripping tongue (12) projecting from the rounded periphery of the body (10) and resting on the cylinder head (1) on a portion other than the peripheral edge zone of the circular recess (4).
